**Europäisches Patentamt**

**European Patent Office**

**Office européen des brevets**

(11) Veröffentlichungsnummer: **0 096 377**
**B1**

(12)

# EUROPÄISCHE PATENTSCHRIFT

(45) Veröffentlichungstag der Patentschrift:
**29.01.86**

(21) Anmeldenummer: **83105475.4**

(22) Anmeldetag: **02.06.83**

(51) Int. Cl.⁴: **C 02 F 1/32, C 02 F 9/00**

(54) **Gerät zur Bereitstellung hochreinen, sterilen Wassers.**

(30) Priorität: **05.06.82 DE 3221350**

(43) Veröffentlichungstag der Anmeldung:
**21.12.83 Patentblatt 83/51**

(45) Bekanntmachung des Hinweises auf die Patenterteilung:
**29.01.86 Patentblatt 86/5**

(84) Benannte Vertragsstaaten:
**AT BE CH DE FR GB IT LI LU NL SE**

(56) Entgegenhaltungen:
**DE - A - 3 039 695**
**DE - A - 3 108 159**

(73) Patentinhaber: **SERAL Erich Alhäuser GmbH,
Industriegebiet Struth, D-5412 Ransbach-Baumbach
(DE)**

(72) Erfinder: **Alhäuser, Erich, Am Hölzeberg 2,
D-5412 Ransbach-Baumbach (DE)**
Erfinder: **Donneau, Gerard,
Jakob-Goedecker-Strasse 36, D-6500 Mainz (DE)**

(74) Vertreter: **Beyer, Werner, Dipl.-Ing. et al, Patentanwälte
Werner Beyer Bernd Jochem Staufenstrasse 36,
D-6000 Frankfurt/Main (DE)**

## Beschreibung

Die Erfindung betrifft ein Gerät zur Bereitstellung hochreinen sterilen Wassers, bestehend aus einem Vorratsbehälter, welchem vorzugsweise vorgereinigtes und teilentsalztes Wasser zuführbar ist, einer Förderpumpe zum Fördern des Wassers aus dem Vorratsbehälter nacheinander durch einen Aktivkohlefilter zur Rückhaltung organischer Substanzen, mindestens einen Ionenaustauscher zur Vollentsalzung und einen Sterilfilter zur Rückhaltung von Keimen und Partikeln, und einem Zapfventil, von welchem eine Leitung zur Rückführung von nichtgezapftem Wasser im Kreislauf zu dem Vorratsbehälter abzweigt.

Geräte dieser Art werden auf den verschiedensten Gebieten eingesetzt wie beispielsweise in der pharmazeutischen Industrie und der Lebensmittelindustrie, der Halbleiterherstellung, der Mikrobiologie, Serologie und Hämatologie u.a.m.

Es ist bekannt, dass das bei diesen Geräten angewandte Verfahren der Entkeimungs-Filtration keine absolute Keimrückhaltung gewährleistet. Man nimmt deshalb bei derartigen Geräten in Kauf, dass vor der Entnahme von sterilem Wasser erst ein Teil des ausfliessenden Wassers verworfen werden muss und dann erst Wasser zu sterilen Zwecken entnommen werden kann. Da die gewünschte Keimfreiheit dann immer noch unsicher ist, wird auch von den Herstellern dieser Geräte keine Garantie für absolute Sterilität gewährleistet.

Aufgabe der Erfindung ist es deshalb, ein Gerät der eingangs genannten Art dahingehend weiterzubilden, dass bei Öffnung des Zapfventils sofort das gewünschte hochreine, sterile Wasser mit optimaler Reinheit nicht nur in chemisch-physikalischer, sondern auch mikrobiologischer Hinsicht zur Verfügung steht.

Erfindungsgemäss wird diese Aufgabe dadurch gelöst, dass das Wasser im Bereich der Abzweigung der Rückführleitung und des Zapfventils ständig der Strahlung eines UV-Brenners unterworfen ist.

Durch den erfindungsgemässen Einsatz eines UV-Brenners im Bereich des Zapfventils und der Abzweigung der Rückführleitung werden durch das Sterilfilter doch noch hindurchtretende Keime mit Sicherheit abgetötet und in Verbindung mit der vorausgesetzten Führung des Wassers im Kreislauf das vor dem Zapfventil anstehende Wasser ständig völlig keimfrei gehalten, so dass beim Öffnen des Zapfventils nicht mehr wie bisher erst eine zumindest dem Leitungsweg zwischen Sterilfilter und Zapfventil entsprechende Wassermenge verworfen werden muss. Desweiteren ist auch das bei geschlossenem Zapfventil durch die Rückführleitung im Vorratsbehälter wieder zuströmende Wasser keimfrei und belastet nicht die von neuem im Kreislauf durchströmten Geräteteile.

Diese letztere Auswirkung der Erfindung kann nach einem ersten Merkmal zur vorteilhaften Ausgestaltung der Erfindung noch dadurch weiter gesteigert werden, dass das bestrahlte rückgeführte Wasser zusammen mit dem neu zugeführten Wasser an der Einmündung in den Vorratsbehälter ständig der Strahlung eines weiteren UV-Brenners unterworfen ist. Dadurch wird nicht nur einem etwaigen Anwachsen von Keimen in der Rückführleitung begegnet, sondern auch die Keime in dem neu zugeführten Wasser werden gleich bei Eintritt in den Kreislauf wirksam bekämpft, was sich auch günstig auf die Standzeit der Gerätekomponenten wie insbesondere den Sterilfilter auswirkt.

Nach einem weiteren Merkmal zur vorteilhaften Ausgestaltung der Erfindung sind die UV-Brenner langgestreckt ausgebildet und in je einem aufrechtstehenden Schutzrohr aus Quarzglas aufgenommen, an dessen Aussenseite das zu bestrahlende Wasser vorbeiströmt. Dabei ist es besonders günstig, wenn das Schutzrohr mit einem dazu koaxialen zylindrischen Aussenmantel grösserer Weite einen engen hohlzylindrischen Strömungskanal bildet, in welchem das zu bestrahlende Wasser tangential einleitbar ist. Dadurch wird mit einer verhältnismässig geringen Leistung des UV-Brenners eine vollständige und durchgreifende Bestrahlung des hindurchströmenden Wassers gewährleistet.

Die vorstehende Ausgestaltung des erfindungsgemässen Gerätes mit einem den UV-Brenner aufnehmenden Schutzrohr und einem dieses umschliessenden Aussenmantel schafft die Voraussetzungen für eine besonders günstige Ausbildung des Zapfventils dergestalt, dass der den ersten Brenner umschliessende Aussenmantel von einem am unteren Ende bis auf eine kleinere Ausflussöffnung geschlossenen Standrohr gebildet ist, in welchem das am unteren Ende geschlossene Schutzrohr, am oberen Standrohrende abgedichtet, zwischen einer die Ausflussöffnung verschliessenden und einer diese Öffnung freigebenden Stellung verschieblich ist. Da bei dieser Ausgestaltung das bewegliche Ventilglied des Zapfventils vom Schutzrohr selbst gebildet ist, wird auch der hinter dem Ventilsitz gelegene Teil des Zapfventils mit der Ausflussöffnung von der UV-Strahlung erfasst und ständig keimfrei gehalten, und es wird eine Keimverseuchung des Ventils rückwärts durch die Ausflussöffnung verhindert.

Das untere Ende des Schutzrohrs für den ersten UV-Brenner kann kegelstumpfförmig ausgebildet sein und mit einer entsprechenden Innenfläche am unteren Ende des Standrohrs dichtend zusammenwirken. Ebenso zweckmässig ist es, das untere Ende des Schutzrohrs für den ersten UV-Brenner kalottenförmig auszubilden und mit einem am Boden des Standrohrs eingelegten Dichtring zusammenwirken zu lassen. In beiden Fällen erfolgt eine automatische Zentrierung des Schutzrohrs mit der Folge:

— einer zuverlässigen Abdichtung;
— dass im unteren Teil keine besondere, die UV-Strahlung hemmende Führung erforderlich ist;
— dass auf dem Umfang des Schutzrohrs innerhalb des Standrohrs eine definierte und gleichmässige Schichtdicke des Wassers vorhanden ist. Dabei ist eine keimtötende Bestrahlung bis in den Auslauf hinein sichergestellt.

Das Schliessen des Ventils erfolgt automatisch und sicher dadurch, dass das Schutzrohr in Schliessrichtung federbelastet und durch einen geeigneten Mechanismum in Öffnungsrichtung betätigbar ist.

Um auch bei geschlossenem Ventil eine wirksame Bestrahlung des in den Vorratsbehälter rückströmenden Wassers zu gewährleisten, ist die Rückführleitung zweckmässig oberhalb der Einmündung des zu bestrahlenden Wassers an das Standrohr angeschlossen.

Die obige Ausgestaltung der Erfindung mit Aufnahme des UV-Brenners in einem Schutzrohr und dessen Umschliessung durch einen koaxialen zylindrischen Aussenmantel zur Bildung eines engen hohlzylindrischen Strömungskanals lässt sich mit Vorteil auch bei dem zweiten UV-Brenner am Vorratsbehälter anwenden. Hierzu ist nach einem weiteren Ausgestaltungsmerkmal der Erfindung der den zweiten Brenner umschliessende Aussenmantel von einem domförmigen Ansatz am Vorratsbehälter gebildet, dessen offenes oberes Ende eine Dichtung zur abgedichteten Aufnahme des Schutzrohrs aufweist. Dabei kann das Schutzrohr mit dem UV-Brenner länger als der domförmige Ansatz bemessen sein und sich bis nahe dem Boden des Vorratsbehälters erstrecken. Mit der Einleitung des neu hinzuströmenden Wassers und des rückgeführten Wassers in den im Dom gebildeten engen hohlzylindrischen Spalt, die auch hier tangential erfolgt und zu einer wirksamen Verwirbelung des Wassers führt, wird alles eintretende Wasser wirksam bestrahlt, und die UV-Strahlung wirkt darüber hinaus weiter auf den eigentlichen Vorratsbehälter und sorgt auch hier für eine optimale Unterdrückung des Keimwachstums.

Ein Ausführungsbeispiel der Erfindung wird nachstehend in Verbindung mit der Zeichnung näher erläutert. Es zeigen:

Fig. 1: in schematischer Darstellung ein Gerät nach der Erfindung zur Bereitstellung von hochreinem sterilen Wasser mit einem UV-Brenner am Zulauf bzw. Rücklauf und einem UV-Brenner am Auslauf,

Fig. 2: in grösserem Massstab einen senkrechten Schnitt durch den Auslauf mit dem Anschluss der Rückführleitung und dem Zapfventil,

Fig. 3: einen Querschnitt nach Linie III-III in Fig. 2.

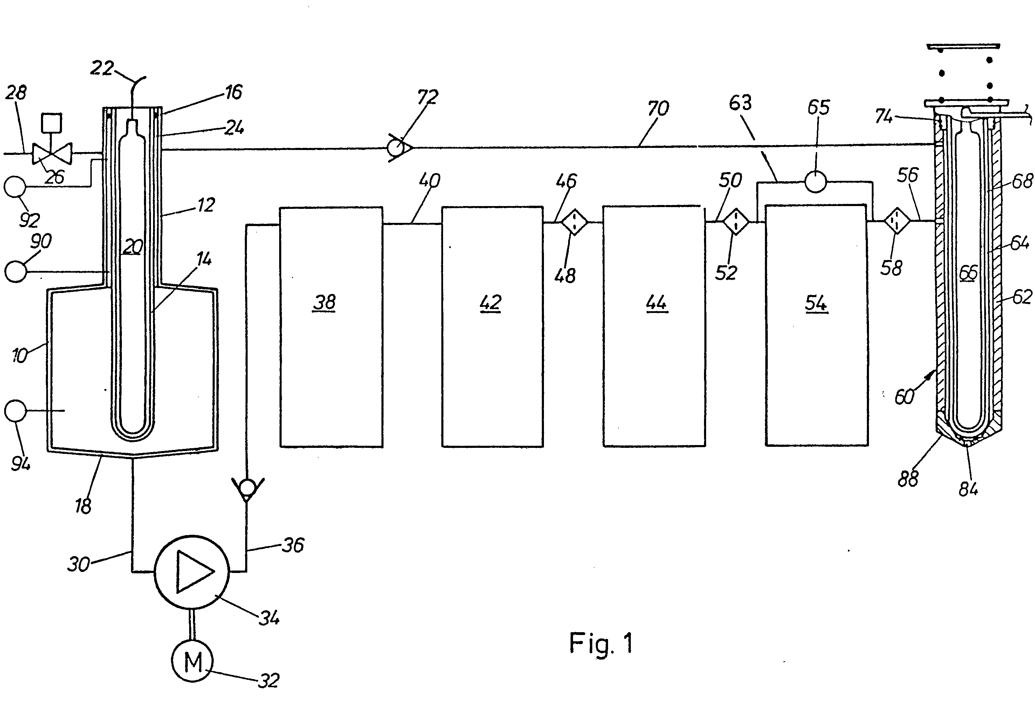

In Fig. 1 ist mit 10 ein vorzugsweise runder Vorratsbehälter gezeigt, der oben in der Mitte einen domförmigen Ansatz 12 aufweist. In den oben offenen Ansatz 12 ist ein aus Quarzglas oder anderem strahlungsdurchlässigem Material bestehendes Rohr 14 eingesetzt und mittels einer Dichtung 16 am oberen Ende des rohrförmigen Ansatzes 12 abgedichtet. Das Rohr 14 erstreckt sich mit seinem geschlossenen unteren Ende bis kurz vor den Boden 18 des Vorratsbehälters 10 und dient als Schutzrohr für einen UV-Brenner 20 in Gestalt einer sich über die volle Rohrlänge erstreckenden UV-Lampe, deren Anschlussleitungen 22 durch das obere offene Ende des Schutzrohrs 14 zu einer (nicht gezeigten) Stromquelle geführt sind.

Zwischen dem Schutzrohr 14 und dem domförmigen Ansatz 12 ist ein enger hohlzylindrischer Strömungskanal 24 ausgebildet, der oben durch die Dichtung 16 abgeschlossen und unten zum Inneren des Vorratsbehälters 10 offen ist. In den Strömungskanal 24 mündet über ein Ventil 26 eine Zulaufleitung 28 zur Versorgung des Geräts mit Wasser, das vorzugsweise mittels bekannter Methoden wie des Ionenaustauschs, der Destillation und der Umkehr-Osmose vorgereinigt und teilentsalzt ist. Die Einmündung der Zulaufleitung 28 erfolgt tangential mit der Folge, dass das in dem domförmigen Ansatz 12 strömende Wasser spiralförmig und turbulent an der Aussenseite des den UV-Brenner 20 aufnehmenden Schutzrohrs 14 vorbeifliesst. Dadurch wird eine längere Verweilzeit mit der Folge einer intensiveren Bestrahlung und optimalen Ausnutzung des UV-Brenners 20 erzielt.

An der tiefsten Stelle des Bodens 18 des Vorratsbehälters 10 ist eine Leitung 30 angeschlossen, die zur Saugseite einer von einem Elektromotor 32 antreibbaren Förderpumpe 34 führt. Die Förderpumpe 34 drückt das aus dem Vorratsbehälter 10 zuströmende Wasser über eine Leitung 36 zu einem Aktivkohlefilter 38, in welchem organische Substanzen zurückgehalten werden. Von dem Aktivkohlefilter 8 führt eine Leitung 40 zu zwei Ionenaustauschern 42 und 44, die über eine Leitung 46 mit einem darin enthaltenen ersten Leitfähigkeitsmesser 48 verbunden sind. Die beiden Ionenaustauscher 42, 44 dienen der Vollentsalzung des hindurchströmenden Wassers, wobei der Austausch der Metallionen in erster Linie in dem Ionenaustauscher 42 vorgenommen wird, während der zweite Ionenaustauscher ein Sicherheitsglied darstellt.

Von dem zweiten Ionenaustauscher 44 führt eine Leitung 50 mit einem weiteren Leitfähigkeitsmesser 52 zu einem Sterilfilter 54, der die Aufgabe hat, Keime und Partikel aus dem hindurchströmenden Wasser zurückzuhalten. Als Sterilfilter kann ein Membranfilter, ein Tiefenfilter oder ein sonstiger geeigneter Filter verwendet werden. Von dem Sterilfilter 54 führt schliesslich eine Leitung 56 über einen Präzisions-Leitfähigkeitsmesser 58 zu einem Auslaufteil 60, das nachstehend näher erläutert wird. Zwischen den Leitungen 50 und 56 ist über eine Leitung 63 ein Druckdifferenzmesser 65 angeschlossen, der bei Erreichen einer bestimmten Druckdifferenz anzeigt, dass die Aufnahmekapazität des Filters 54 für Keime und Partikel erschöpft ist.

Der Aufbau des Aktivkohlefilters 38, der Ionenaustauscher 42, 44 und des Sterilfilters 54 kann verschieden sein und ist grundsätzlich bekannt.

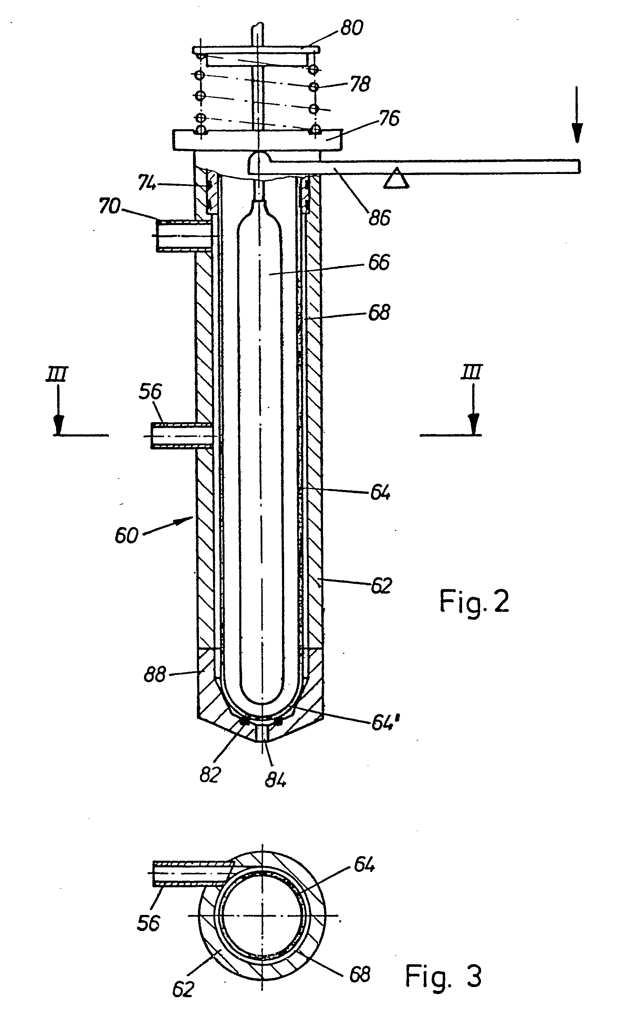

Das Auslaufteil 60 besteht aus einem Standrohr 62 und einem in dieses ragenden Schutzrohr 64, welches in gleicher Weise wie das Schutzrohr 14 einen von einer langgestreckten UV-Lampe gebildeten UV-Brenner 66 aufnimmt. Zwischen dem Schutzrohr 64 und dem Standrohr 62, ist ein enger hohlzylindrischer Strömungskanal 68 gebildet, in welchen die Leitung 56, wie in Fig. 3 gezeigt, tangential einmündet. Dadurch wird in gleicher Weise wie bei der Einmündung der Zulaufleitung 28 in den domförmigen Ansatz 12 des Vorratsbehälters 10 eine spiralförmige turbulente Strömung um das Schutzrohr 64 erzielt.

Oberhalb der Einmündung der Leitung 56 ist an das Standrohr 62 eine Rückströmleitung 70 angeschlossen, die über ein Rückschlagventil 72 zu dem domförmigen Ansatz 12 des Vorratsbehälters 10 führt und in diesen genau wie die Zulaufleitung 28 tangential einmündet.

Das Schutzrohr 64 ist gegen das Strandrohr 62 an dessen oberem Ende durch eine Dichtung 74 abgedichtet, die das Schutzrohr 64 innerhalb des Standrohrs 62 zentriert und zugleich eine Verschiebung des Schutzrohrs 64 im Standrohr 62 gestattet. Das herausragende obere Ende des Schutzrohrs 64 ist an einem Ringteller 76 befestigt, auf dem eine Druckfeder 78 lastet, die sich gegen ein festes widelager 80 abstützt.

Das untere Ende 64' des Schutzrohrs 64 ist, wie insbesondere Fig. 2 zeigt, kugelkalottenförmig ausgebildet und wird von der Druckfeder 78 gegen einen Dichtungsring 82 am Boden des Standrohrs 62 in dichtende Anlage gedrückt. Innerhalb des Dichtungsrings 82 enthält der Boden des Standrohrs 62 eine Ausflussöffnung 84, die demgemäss bei gegen den Dichtring 82 dichtenden Schutzrohr 64 vom hohlzylindrischen Strömungskanal 68 im Standrohr 62 abgetrennt, gleichzeitig aber durch das kugelkalottenförmige untere Ende des Schutzrohrs 64 der keimtötenden Strahlung des UV-Brenners 66 unterworfen ist. Auf diese Weise bildet das Schutzrohr 62 den Ventilkörper eines Zapfventils, welches durch einen die Druckplatte 76 untergreifenden Betätigungsmechanismus beispielsweise in Gestalt eines Gabelhebels 86 geöffnet werden kann.

Der untere Abschnitt 88 des Standrohrs 62 besteht aus einem abflammbaren Material, mit welchem in bekannter Weise ein Abflammen der Ausflussöffnung zur Keimabtötung auch an der von der UV-Strahlung nicht erfassten Aussenseite möglich ist. Selbstverständlich kann auch das gesamte Standrohr aus abflammbarem Material wie Metall, Glas oder einem geeigneten Kunststoff bestehen.

Anstelle der kugelkalottenförmigen Ausbildung des unteren Schutzrohrendes kann dieses auch kegelstumpfförmig ausgebildet und von einer entsprechenden kegelstumpfförmigen Innenfläche am unteren Ende des Standrohrs dichtend aufnehmbar sein, wobei dann der Dichtring 82 entfällt. In beiden Fällen ist zusätzlich zu der zentrischen Führung des Schutzrohrs 64 in der Dichtung 74 eine Zentrierung des Schutzrohrs 64 im Standrohr 62 über die gesamte Standrohrlänge gewährleistet mit der Folge, dass der hohlzylindrische Strömungskanal 68 an allen Stellen die gleiche radiale Dicke aufweist, die eine optimale Strahlungswirkung auf das hindurchströmende Wasser sicherstellt.

Im Betrieb des Geräts wird die Förderpumpe 34 ständig vom Elektromotor 32 angetrieben, und die beiden UV-Brenner 20 und 66 sind ständig eingeschaltet. Solange das von dem Schutzrohr 64 gebildete Zapfventil geschlossen ist, zirkuliert das in das Gerät durch die Zulaufleitung 28 eingefüllte Wasser vom Vorratstank 10 durch den Aktivkohlefilter 38, die Ionenaustauscher 42, 44, den Sterilfilter 54 zum Auslaufteil 60 und von diesem über die Rücklaufleitung 70 wieder zurück zum vorratsbehälter 10, wobei es im Auslaufteil 60 und im domförmigen Ansatz 12 der keimtötenden Strahlung der UV-Brenner 66 bzw. 20 unterworfen ist.

Sollte Wasser gezapft werden, wird der Gabelhebel 86 betätigt und das Schutzrohr 64 vom Dichtring 82 abgehoben, so dass das Auslaufteil 60 durchströmende hochreine und sterile Wasser durch die Ausflussöffnung 84 ausfliessen kann.

Zwei Niveaufühler 90, 92 am domförmigen Ansatz 12 überwachen die Standhöhe des Wassers in diesem Teil und steuern das Zulaufventil 26 dergestalt, dass immer ausreichend Wasser im domförmigen Ansatz 14 enthalten ist. Ein weiterer Fühler 94 schützt die Pumpe 34 vor Trockenlauf.

## Patentansprüche

1. Gerät zur Bereitstellung hochreinen sterilen Wassers, bestehend aus einem Vorratsbehälter, welchem vorzugsweise vorgereinigtes und teilentsalztes Wasser zuführbar ist, einer Förderpumpe zum Fördern des Wassers aus dem Vorratsbehälter nacheinander durch einen Aktivkohlefilter zur Rückhaltung organischer Substanzen, mindestens einen Ionenaustauscher zur Vollentsalzung und einen Sterilfilter zur Rückhaltung von Keimen und Partikeln, und einem Zapfventil, von welchem eine Leitung zur Rückführung von nichtgezapftem Wasser im Kreislauf zu dem Vorratsbehälter abzweigt, dadurch gekennzeichnet, dass das Wasser im Bereich der Abzweigung der Rückführleitung (70) und des Zapfventils ständig der Strahlung eines UV-Brenners (66) unterworfen ist.

2. Gerät nach Anspruch 1, dadurch gekennzeichnet, dass das bestrahlte rückgeführte Wasser zusammen mit dem neu zugeführten und teilensalzten Wasser an der Einmündung in den Vorratsbehälter (14, 10) ständig der Strahlung eines weiteren UV-Brenners (20) unterworfen ist.

3. Gerät nach Anspruch 1 oder 2, dadurch gekennzeichnet, dass die UV-Brenner (66, 20) langgestreckt ausgebildet und in je einem aufrechtstehenden Schutzrohr (64 bzw. 14) aus Quarzglas oder anderem strahlungsdurchlässigen Material aufgenommen sind, an dessen Aussenseiten das zu bestrahlende Wasser vorbeiströmt.

4. Gerät nach Anspruch 3, dadurch gekennzeichnet, dass das Schutzrohr (64, 14) mit einem dazu koaxialen zylindrischen Aussenmantel (62, 12) grösserer Weite einen engen hohlzylindrischen Strömungskanal (68, 24) bildet, in welchem das zu bestrahlende Wasser tangential einleitbar ist.

5. Gerät nach Anspruch 4, dadurch gekennzeichnet, dass der den ersten Brenner (66) umschliessende Aussenmantel von einem am unteren Ende bis auf eine kleinere Ausflussöffnung (84) geschlossenen Standrohr (62) gebildet ist, in welchem das am unteren Ende geschlossene Schutzrohr (64), am oberen Standrohrende abgedichtet, zwischen einer die Ausflussöffnung (84) verschliessenden und einer diese Öffnung (84) freigebenden Stellung verschieblich ist.

6. Gerät nach Anspruch 5, dadurch gekennzeichnet, dass das untere Ende des Schutzrohrs (64) kegelstumpfförmig ausgebildet ist und mit einer entsprechenden Innenfläche am unteren Ende des Standrohrs (62) dichtend zusammenwirkt.

7. Gerät nach Anspruch 5, dadurch gekennzeichnet, dass das untere Ende des Schutzrohrs (64) kalottenförmig ausbegildet ist und mit einem am Boden des Standrohrs (62) eingelegten Dichtring (82) zusammenwirkt.

8. Gerät nach einem der Ansprüche 5 bis 7, dadurch gekennzeichnet, dass das Schutzrohr (64) in Schliessrichtung (durch 78) federbelastet und durch einen geeigneten Mechanismus (Gabelhebel 86) in Öffnungsrichtung betätigbar ist.

9. Gerät nach einem der Ansprüche 5 bis 8, dadurch gekennzeichnet, dass die Rückführleitung (70) oberhalb der Einmündung (Leitung 56) des zu bestrahlenden Wassers an das Standrohr (62) angeschlossen ist.

10. Gerät nach einem der Ansprüche 5 bis 9, dadurch gekennzeichnet, dass wenigstens das untere Ende (88) des Standrohrs (62) aus einem abflammbaren Material besteht.

11. Gerät nach Anspruch 4, dadurch gekennzeichnet, dass der den zweiten Brenner (20) umschliessende Aussenmantel von einem domförmigen Ansatz (12) am Vorratsbehälter (10) gebildet ist, dessen offenes oberes Ende eine Dichtung (16) zur abgedichteten Aufnahme des Schutzrohrs (14) aufweist.

12. Gerät nach Anspruch 11, dadurch gekennzeichnet, dass das Schutzrohr (14) mit dem UV-Brenner (20) länger als der domförmige Ansatz (12) bemessen ist und sich bis nahe dem Boden (18) des vorratsbehälters erstreckt.

**Claims**

1. Apparatus for the preparation of highly pure sterile water consisting of a storage container, which is preferably fed with precleaned and partially desalinated water, of a feed pump for feeding the water out of the storage container in series through an absorbent carbon filter for the retention of the organic substances, at least one ion exchanger for complete desalination and a sterile filter for the retention of germs and particles, and a tap valve from which a pipe branches off for the return of untapped water in the circuit to the storage container, wherein, the water in the area of the branch-off of the return line (70) and of the tap is constantly subjected to the rays of an UV burner (66).

2. Apparatus according to Claim 1, wherein, the irradiated, returned water is constantly subjected to the rays of a further UV burner (20) at the entrance into the storage container (14, 10) together with the newly fed and partially desalinated water.

3. Apparatus according to Claims 1 or 2, wherein, the UV burners (66, 20) have an elongated shape and are each accomodated in a vertical protective tube (64 viz. 14) made of quartz glass or another material which permits the transmission of radiation on the outside of which the water to be irradiated flows past.

4. Apparatus according to Claim 3, wherein, the protective tube (64, 14) together with a cylindrical outer sheath of a larger diameter coaxial to itself forms a narrow hollow cylindrical flow channel (68, 24) into which the water to be irradiated can be fed tangentially.

5. Apparatus according to Claim 4, wherein, the outer sheath surrounding the first burner (66) which is formed of a closed stand tube (62) with the exception of a small drainage opening (84) at the bottom end, in which the protective tube (64), being closed at the bottom end, sealed at the top end, is slideable between a position closing the drainage opening (84) and one exposing this opening (84).

6. Apparatus according to Claim 5, wherein, the bottom end of the protective tube (64) is made in a blunt, cone shape and interacts seal-tight with an appropriate internal surface on the bottom end of the sand tube (62).

7. Apparatus according to Claim 1, wherein, the bottom end of the protective tube (64) is shaped spherically and interacts with a sealing ring (82) inserted in the base of the stand tube (62).

8. Apparatus according to Claims 5 through 7, wherein, the protective tube (64) is spring-loaded in the direction of closing (by 78) and is actuatable by a suitable mechanism (forked steering arm 86) in the direction of opening.

9. Apparatus according to Claims 5 through 8, wherein, the return line (70) is connected to the stand tube (62) above the entrance (line 56) of the water to be irradiated.

10. Apparatus according to Claims 5 through 9 wherein, at least the bottom end (88) of the stand tube (62) consists of a singeable material.

11. Apparatus according to Claim 4, wherein the outer sheath enclosing the second burner (20) is formed of a dome shaped shaft (12) on the storage container (10), whose open upper end has a seal (16) for the sealed seating of the protective tube (14).

12. Apparatus according to Claim 11, wherein, the protective tube (14) together with the UV burner (12) is dimensioned longer than the dome shaped shaft (12) and stretches down near to the base (18) of the storage container.

**Revendications**

1. Dispositif pour la préparation d'une eau stérile et de haute pureté, comprenant un réservoir de stockage alimenté préférablement avec de l'eau préépurée et partiellement déminéralisée, une pompe d'alimentation pour envoyer l'eau du réservoir de stockage, successivement à un filtre à charbon activé pour retenir les substances organiques, à au moins un échangeur d'ions pour adoucir complètement l'eau, et à un filtre stérile, pour retenir les germes et les particules, avec enfin un clapet de soutirage d'où une canalisation bifurque pour renvoyer vers le réservoir de stockage l'eau non soutirée, caractérisé en ce que dans la zone du clapet de soutirage et de la bifurcation vers la canalisation de retour (70), l'eau est constamment soumise au rayonnement d'un brûleur à rayons ultraviolets (66).

2. Dispositif suivant la revendication 1, caractérisé en ce que, à l'entrée dans le réservoir de stockage (14, 10), on soumet constamment au rayonnement d'un autre brûleur à rayons ultraviolets (20), à la fois l'eau irradiée du circuit de retour, et l'eau de renouvellement partiellement déminéralisée.

3. Dispositif suivant l'une des revendications 1 ou 2, caractérisé en ce que les brûleurs à ultraviolets (66, 20), sont disposés longitudinalement, chacun dans un tube de protection vertical (64, 14), en verre de quartz ou en tout autre matériau transparents aux rayons, l'eau à irradier circulant sur la paroi extérieure desdits tubes de protection.

4. Dispositif suivant la revendication 3, caractérisé en ce que chaque tube de protection (16, 14), comprend une chemise cylindrique extérieure coaxiale (62, 12), à l'intérieur de laquelle se trouve défini, dans un interstice cylindrique annulaire, un canal d'écoulement (68, 24), dans lequel l'eau à irradier est introduite tangentiellement.

5. Dispositif suivant la revendication 4, caractérisé en ce que la chemise entourant le premier brûleur (66) est constituée par un tube vertical (62), dont l'extrémité inférieure est fermée, à l'exception d'une petite ouverture d'écoulement (84), et dans lequel le tube de protection (64) fermé à son extrémité inférieure, et relié à l'extrémité supérieure du tube vertical, peut librement coulisser entre une position qui ferme l'ouverture d'écoulement (84), et une position qui ouvre cette ouverture (84).

6. Dispositif suivant la revendication 5, caractérisé en ce que l'extrémité inférieure du tube de protection (64) a une forme tronconique, et se trouve reliée de façon étanche avec la paroi interne correspondante de l'extrémité inférieure du tube vertical (62).

7. Dispositif suivant la revendication 5, caractérisé en ce que l'extrémité inférieure du tube de protection (64) a une forme en calotte sphérique, tandis qu'elle coopère avec un joint d'étanchéité (82) prévu à la base du tube vertical (62).

8. Dispositif suivant l'une des revendications 5 à 7, caractérisé en ce que le tube de protection (64) est rappelé élastiquement dans le sens de la fermeture, comme indiqué par (78), et actionné dans le sens de l'ouverture par un mécanisme approprié (fourchette 86).

9. Dispositif suivant l'une des revendications 5 à 8, caractérisé en ce que la canalisation de retour (70) est reliée au tube vertical (62) au-dessus de l'embouchure (canalisation 56) de l'eau à irradier.

10. Dispositif suivant l'une des revendications 5 à 9, caractérisé en ce qu'au moins l'extrémité inférieure (88) du tube vertical (62) est en un matériau ininflammable.

11. Dispositif suivant la revendication 4, caractérisé en ce que la chemise extérieure entourant le second brûleur (20) est constituée au niveau du réservoir de stockage (10) par un dôme (12), dont l'ouverture supérieure ouverte comporte un joint d'étanchéité (16) pour le raccordement étanche du tube de protection (14).

12. Dispositif suivant la revendication 11, caractérisé en ce que le tube de protection (14) équipé du brûleur à ultraviolets (20) a une longueur supérieure à celle du dôme (12), si bien qu'elle s'étend jusqu'à proximité du fond inférieur (18) du réservoir de stockage.

**Fig. 1**

Fig. 2

Fig. 3

9